# EUROPEAN PATENT APPLICATION

(11) **EP 3 128 575 A1**
(43) Date of publication of application: **08.02.2017**
(21) Application number: 15773038.3
(22) Date of filing: 20.03.2015
(51) Int. Cl.: H01M 2/10

(54) **RECHARGEABLE-BATTERY DEVICE**

(30) Priority: 31.03.2014 JP 2014074585
(71) Applicant: NEC Corporation, Tokyo 108-8001 (JP)
(72) Inventor: YAMADA, Masanori, Tokyo 108-8001 (JP); HIGUCHI, Isao, Tokyo 108-8001 (JP); SUZUKI, Toru, Tokyo 108-8001 (JP)
(74) Representative: Vossius & Partner Patentanwälte Rechtsanwälte mbB
(86) International application number: PCT/JP2015/058585
(87) International publication number: WO 2015/151884

(57) **Abstract**

This storage battery apparatus (1), comprising: a battery section (10) including a battery stack (30) in which a plurality of battery modules (20) are stacked; and a charge and discharge device (92) configured to manage charging and discharging of the battery module; wherein the battery module (20) has a dimensional relationship of C> B> A, wherein A is a thickness, B is a width, and C is a height of the battery module, and wherein the battery modules (20) are disposed so that the width direction of the battery module extends along front-rear direction of the storage battery apparatus, and wherein the battery section (10) is disposed below the charge and discharge device (92).

## Description

### TECHNICAL FIELD

The present invention relates to a storage battery apparatus including a plurality of battery modules. In particular, the present invention relates to a storage battery apparatus with a low center of gravity having excellent accessibility to a battery module in spite of relatively simple structure.

### BACKGROUND ART

Storage battery apparatus has a plurality of rechargeable battery modules, and discharges electricity charged in the battery module as necessary. With respect to use of such storage battery apparatus, for example, it discharges electricity in daytime charged during nighttime at a cheaper fee, or, it discharges electricity in nighttime charged by a solar power during daytime, for example. Further, storage battery apparatus may also be used as an emergency power supply during power outages. Such a storage battery apparatuses are conventionally often installed in factories, offices, and commercial facilities. In recent years, such a storage battery apparatus are installed in general houses and the like.

Patent Document 1 discloses a home use storage battery device that has a configuration to reduce in size and to facilitate maintenance in which the stacked batteries are movably supported on rails, and the batteries can be moved toward a front surface of the housing (front surface: the largest surface of the housing that has relatively high and relatively short depth). Further, the stacked battery modules are positioned in lower part of the storage battery apparatus, while a power conditioner and a controller unit are arranged in upper part.

### PRIOR ART DOCUMENTS

Patent Document 1: Japanese Patent Laid-Open No.2012-009310

### SUMMARY OF INVENTION

### TECHNICAL PROBLEM

In the configuration of the cited document 1, since the heavy battery is positioned in the lower stage, it would be possible to lower the center of gravity of the entire apparatus. However, in a layout that the width direction of the battery is perpendicular to the depth direction of the apparatus, there is the following problem. That is, for the backside battery module, it is necessary to pull the battery toward front side to maintenance it. Further, because the configuration uses the rails to support battery modules, it is considered that the structure becomes complicated, and the weight balance of the apparatus as a whole becomes unstable in a state where the heavy batteries have been pulled out.

The objective of the present invention is to provide a storage battery apparatus with a low center of gravity having excellent accessibility to a battery module in spite of relatively simple structure.

### MEANS FOR SOLVING THE PROBLEMS

A Storage battery apparatus according to an embodiment of the present invention for achieving the above objective is as follows:
a storage battery apparatus, comprising:
   a battery section including a battery stack in which a plurality of battery modules are stacked; and
   a charge and discharge device for managing charging and discharging of the battery module;
wherein the battery module has a dimensional relationship of C> B> A, wherein A is the thickness of the battery module, B is the width, and C is the height, and wherein the battery modules are disposed so that the width direction of the battery module is along front-rear direction of the storage battery apparatus, and wherein the battery section is disposed below the charge and discharge device.

With this configuration, since the battery section is disposed below the charge and discharge device, low center of gravity of the entire storage battery apparatus is achieved. Further, because the battery module is disposed such that the width direction of the battery module is the same as the depth direction of the storage battery apparatus, accessibility to each battery module is improved even if the apparatus has no rails to pull out the battery modules.

It is noted that in the present invention the battery section may be attached "fixedly" to a frame or the like without using rails or the like. The term attaching "fixedly" refers to a state in that attached battery does not move. Therefore, both removal attachment and non-removable attachment can be used.

### (TERMINOLOGY)

"BATTERY CELL" in this specification refers to an electrochemical cell such as a film-covered battery that is used as one unit for battery
"BATTERY MODULE" refers to a module for outputting a predetermined power that has one or more battery cells and a case for accommodating it.
"STORAGE BATTERY UNIT" refers to a unit which has a plurality of the above-mentioned battery modules. "STORAGE BATTERY UNIT" corresponds to "battery section" in the claims.
"STORAGE BATTERY APPRATUS" refers to a whole apparatus, which includes at least one storage battery units (battery part), and its control circuit and the like.
"SHEET-LIKE HEAT CONDUCTOR" refers not only to a heat conductor preformed in sheet-shape, but to a sheet heat conductor formed by disposing material with a fluidity between some members and solidifying the material. "SHEET-LIKE" includes both a sheet with flat surface and a sheet with convexo-concave surface.
"SEALED" - in a description that housing is accommodated in sealed manner, the term "SEALED" refers to a seal which ensures self-extinguishing of the battery cell if the battery cell is ignited. Therefore, it includes both being completely sealed and substantially sealed. "SUBSTANTIALLY PARALLEL" is not limited to a complete parallel state, but includes substantially parallel state with inclining at several degrees.

### EFFECT OF THE INVENTION

According to the present invention, a storage battery can be obtained with a low center of gravity having excellent accessibility to a battery module in spite of relatively simple structure.

### BRIEF DESCRIPTION OF DRAWINGS

Fig. 1 is a perspective view of a disassembled storage battery unit according to one embodiment of the present invention.
Fig. 2 is a perspective view of an example storage battery apparatus.
Fig. 3 is a perspective view of an appearance example the storage battery apparatus.
Fig. 4 is a perspective view for explaining a battery module and a heat conductive plate and the like.
Fig. 5 is a cross-sectional view of the storage battery unit.
Fig. 6 is an enlarged sectional view showing a seal member disposed between the flange portion s of the battery covers and a peripheral structure thereof.
Fig. 7 is a plan view of the battery cover.
Fig. 8 is a sectional view showing the vicinity of the side surface of battery module in assembled state.
Fig. 9 is a schematic cross-sectional view of storage battery units stacked in vertical direction.
Fig. 10A is a perspective view of an example of frames.
Fig. 10B is an enlarged perspective view of a part of the frame of FIG 10A.
Fig. 10C(a) is a sectional view taken along the C-C line of Fig. 10A, 10C(b) and (c) are enlarged views of portions Fig. 10C(a) respectively.
Fig. 10D is a sectional view taken along the D-D line of Fig. 10A.
Fig. 10E(a) is a sectional view taken along the E-E line of Fig. 10A, 10E(b) is an enlarged views of portion of Fig. 10C(a).
Fig. 11 is a view for explaining a mounted state of the storage battery unit.
Fig. 12 is a perspective view of a disassembled storage battery unit according to the other embodiment.
Fig. 13 is a sectional view schematically showing a configuration of the storage battery unit of Fig. 12.
Fig. 14 is a sectional view schematically showing an example of a storage battery unit having heat conductive sheet.

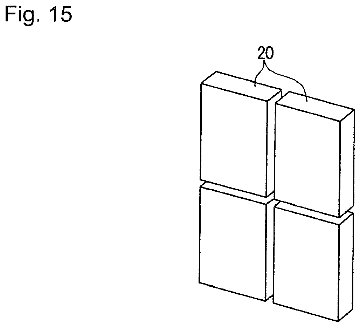

Fig. 15 a perspective view illustrating four battery modules arranged flatly and accommodated.
Fig. 16A a view showing various arrangements of the storage battery unit and PCS unit and the like.
Fig. 16B a view showing various arrangements of the storage battery unit and PCS unit and the like.
Fig. 17 is a perspective view schematically showing an example of a battery cover available in one embodiment of the present invention.

### DESCRIPTION OF EMBODIMENT

Embodiments of the present invention will be described below with reference to drawings. Configuration represented in the drawings is merely embodiments of the present invention. The present inventions are not limited to the specific configurations but can be suitably changed without departing from the scope of the present invention. In the following description, inventions according to some aspects of the present invention are described in separate embodiments; however, technical matters disclosed in each embodiment may be appropriately combined.

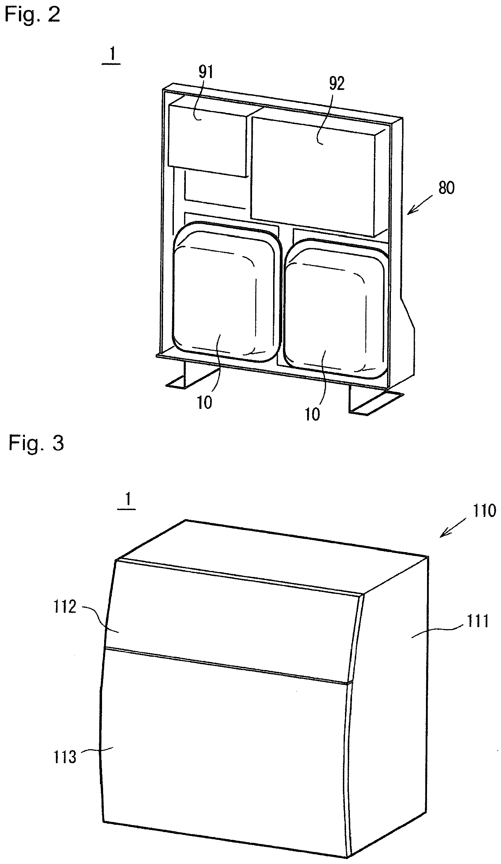

A storage battery apparatus 1 of the present embodiment as illustrated in Fig. 2 is a stationary type power supply apparatus, which has two storage battery units 10, a junction box 91, a PCS (Power Conditioner System) unit 92, and a frame 80 for holding them. Appearance (housing 110) of the storage battery device 1 is shown in Fig. 3, for example. Detailed description for the storage battery apparatus 1 and the housing 110 will be described later.

### (Storage battery units)

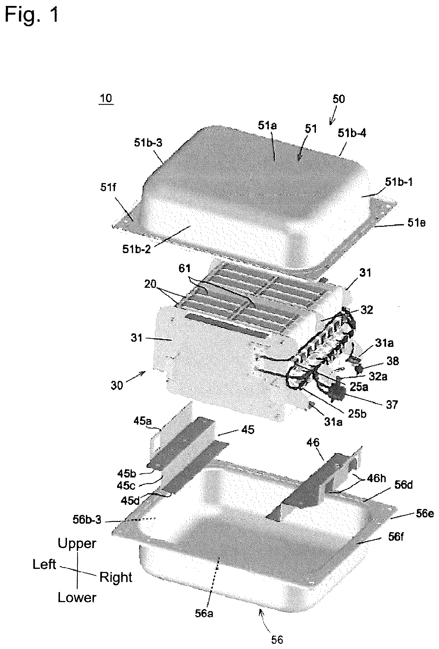

Storage battery unit 10 has a battery stack 30 in which a plurality of battery modules 20 are stacked and a sealed housing 50 for housing the battery stack 30 as shown in Fig. 1. The sealed housing 50 consists of a pair of battery covers 51, 56 disposed so as to face each other in this example.

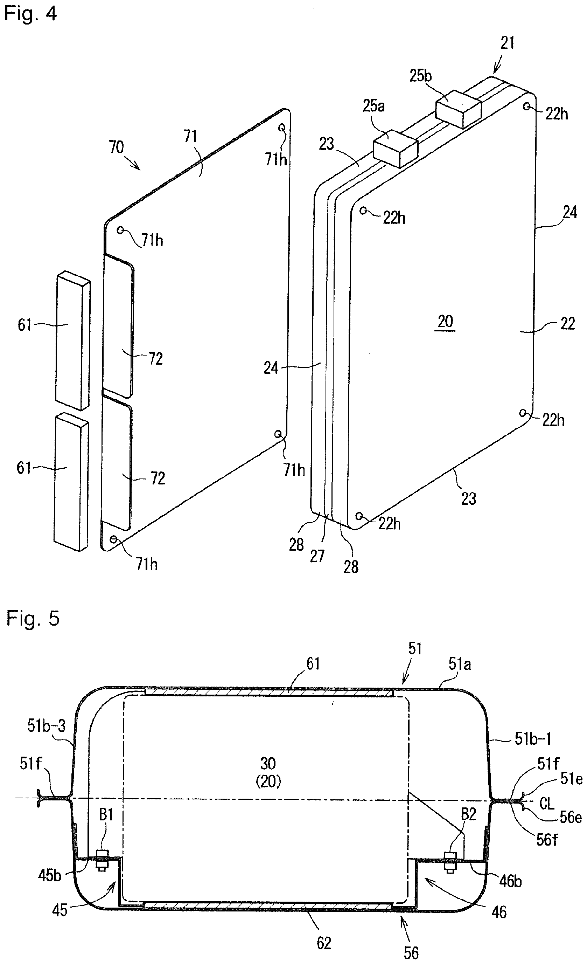

With respect to the battery stack 30, in this example, eight battery modules 20 are electrically connected to each other in series. It is noted that the number of the battery modules 20 is not limited to eight, but may be seven or less or nine or more. The battery module 20 may be formed in a flat shape as a whole as shown in Fig. 4.

Specifically, the battery module 20 has a thin rectangular parallelepiped housing case 21, in which one or more electrochemical cells (not shown) are disposed. Here, outer surfaces of the housing case 21 (in other words, outer surfaces of the battery module 20) are defined. As shown in Fig. 4, reference numeral 22 indicates a main surface (indicating only one), reference numeral 23 indicates a short a side surface, and reference numeral 24 indicates a long side surface. A positive electrode terminal and a negative electrode terminal 25a, 25b are disposed on the upper side surface 23. Terminals 25a, 25b protrude from the side surface 23.

Various materials can be selected for the housing case 21. For example, a plastic case 27 and metal covers 28, 28 attached to the surface may be used. Metal cover 28 can cover almost all of the main surface 22 and parts of the side surfaces 23, 24. By attaching such covers 28 to the main surfaces 22, 22 respectively, almost all the battery module 20 can be covered with the metal cover 28. Alternatively, a housing case made of plastic or metal as a whole may be used.

From the point of view of heat dissipation of the battery module 20, it is preferable for internal heat to be efficiently dissipated to the outside of the battery module. The above configuration allows heat to be transmitted effectively, via metal covers 28, to a heat dissipation member disposed outside.

Referring again to Fig. 4, corners of the housing case 21 (a connecting portion between the side surfaces 23, 24) are rounded shape. Through holes 22h penetrating the case in its thickness direction are formed near each corners of the housing case 21. The battery module 20 are fixed each other by tightening a fixing rod (not shown) inserted within the through hole 22h. It is noted that rounded corner of the housing case can be omitted. With respect to through holes 22h, one or two or more through holes may be formed at any position.

Electrochemical cells disposed in a housing case 21 may be a film-covered battery as a lithium ion secondary battery. Film-covered battery generally has a battery element in which positive electrodes and negative electrodes are alternately stacked via separators. The battery element is sealed together with an electrolyte in the exterior film such as a laminate film. Voltage of a electrochemical cell may be within a range of 3.0V to 5.0V or 3.0V to 4.0V.

Battery modules in the housing case 21 may be connected all in series, or in a combination of parallel and series. Specific arrangement is not limited to, but for example, two to four battery cells may be housed in a case in a stacked manner in its thickness direction. More particularly, in view of a theoretical affinity for a protection device, power-of-two (e.g. two or four) electrochemical cells may be disposed.

It is noted that a storage battery for home use has battery cells connected in series, since it is necessary to output the AC power similar to a single-phase three-wire AC200V supplied to homes from a power company. Since laminate-type lithium-ion batteries (film-covered batteries) are thin and lightweight, it is advantageous for multi-serialization and lithium-ion batteries are utilized storage battery device for home use. To output a single-phase three-wire AC200V, it is preferable to obtain almost DC 200V by connecting batteries in series inside a device in order to maximize an efficiency in a power conditioner (hereinafter, PCS). Therefore, for batteries having an average voltage 4V, a configuration in which a single module with 64 battery units connected in series or two modules with 32 storage battery units connected in series are disposed. When using 4 series of battery modules, may be configured to connect the module to 16 or eight modules connected is series inside a battery area may be used.

### (Battery stack)

A battery stack 30 is a sub-assembly in which a plurality of battery modules 20 are stacked. In this example, eight battery modules 20 are aligned (stacked) in the thickness direction. End plates 31, 31 are disposed at both ends of the battery stack. A partition plate 32 is disposed at an intermediate portion. These plates may be omitted in some cases.

The end plate 31 and the partition plate 32 may be a sheet metal, for example. The end plate 31 and the partition plate 32, in this example, have roles of supporting the battery module 20 and fixing the battery module 20 to supporting members 45, 46 described later. For the latter role, each of the end plate 31 and the partition plate 32 has an extending portion 31a and 32a in a part thereof. Fixing portions are provided at a tip of the extending portions 31a and 32a where a hole for a fixing screw to be inserted is formed, and this portion is configured to be fixed to the supporting member 46 described later.

Although detailed illustration is omitted, a fixing portion is also provided at tip of the other side (left in Fig. 1) of extending portions 31 a, 32a where a hole for a fixing screw to be inserted is formed, and this portion is configured to be fixed to the supporting member 45 described later.

Size of the end plate 31 and the partition plate 32 may be, for example, the same or substantially the same as the battery module 20, or may be slightly larger than the battery modules as shown in Fig. 1. Although detailed illustration is omitted, the rods (four, for example) for securing all the battery modules 20 may be configured to penetrate, end plates 31, four battery modules 20, partition plate 32, other four battery modules 20, and the other end plate 31 in order. Securing is carried out by tightening the nut to the tip of the rod.

Electrical connection of the battery modules 20 in the battery stack 30 may be a serial connection or may be a combination of parallel and series connections. For electrical connections, a busbar (not shown), a cable or the like can be used.

The battery stack 30 may also have one or more sensors (not shown) for measuring temperature of the battery module 20.

The battery stack 30 of Fig. 1 has a power connection portion 37 for outputting power and a signal connection portion 38 for outputting a detected signal of temperature sensor or the like to the outside. In order to provide electrical connection with the connecting portions 37 and 38, openings may be formed on the battery cover 56 to which connectors are attached. Waterproof connectors may be used.

### (Battery cover)

Battery covers 51, 56 for constituting a sealed housing 50 are described in detail. As shown in Fig.1 and Fig. 5, entire shape of battery covers 51, 56 may be identical or symmetrical, but detailed shape can be slightly different from the others. Explaining the battery cover 51 by way of example, it may be made by pressing a metal plate (deep drawing, for example). The battery cover 51 has a bathtub-like shape as a whole, in other words, a shape having a seamlessly formed cup portion with a certain depth. For a battery caver, it is preferable that at least the cup portion is formed by the same material and single member. It is noted that this does not mean to exclude disposing a member for pulling a cable on a part of the cup portion, or, disposing a certain member separate from the cup portion for connecting other component or the like.

Although it is depicted such that a cup portion protrudes upward, the battery cover 51 has a cover surface 51a corresponding to a bottom surface of the cup portion, four side surfaces 51b-1 to 51 b-4 (hereinafter, simply referred to as "side surface 51 b") extending from the periphery of the cover surface 51 a , and a flange portion 51f formed at the end of the side surfaces 51b.

Corners between the cover surface 51a and the side surface 51b and corners between adjacent side surfaces 51b are gently rounded. Curvature radius of the corner may be 25 mm or more (by way of example, the thickness of material is 1.5 mm or more and 2.5 mm or less), more specifically 30 mm or more in order to appropriately form such a shape.

Material of the battery covers 51, 56 may be, for example, rolled steel plate, stainless steel plate or the like. The thickness of the material of the battery covers 51, 56, depending on a required module size or the like may be for example in range of 1.2mm to 2.0mm.

The cover surface 51 a may be a flat surface not particularly processed, or a concavo-convex surface. Such a concavo-convex surface can be designed in terms of several viewpoints, however, it can be designed in accordance with improving rigidity and heat dissipating property. The side surfaces 51 b may be substantially vertical with respect to the cover surface 51 a, or tapered at 1 to 3 degrees.

The flange portion 51f is shaped in flat to extend within a virtual reference plane (not shown) and its overall outer shape is a square. By fixing the flange portion 51f of the battery cover 51 to the flange portion 56f of the other battery cover 56, a closed space is formed between the covers 51, 56. Fixing screw, welding, riveting or the like can be used for securing the flange portions 51f, 56f. A plurality of through holes (not shown) for fixing screws or the like may be formed on the flange portions 51f, 56f.

Press working or a secondary processing such as drilling may be used for forming the through holes.

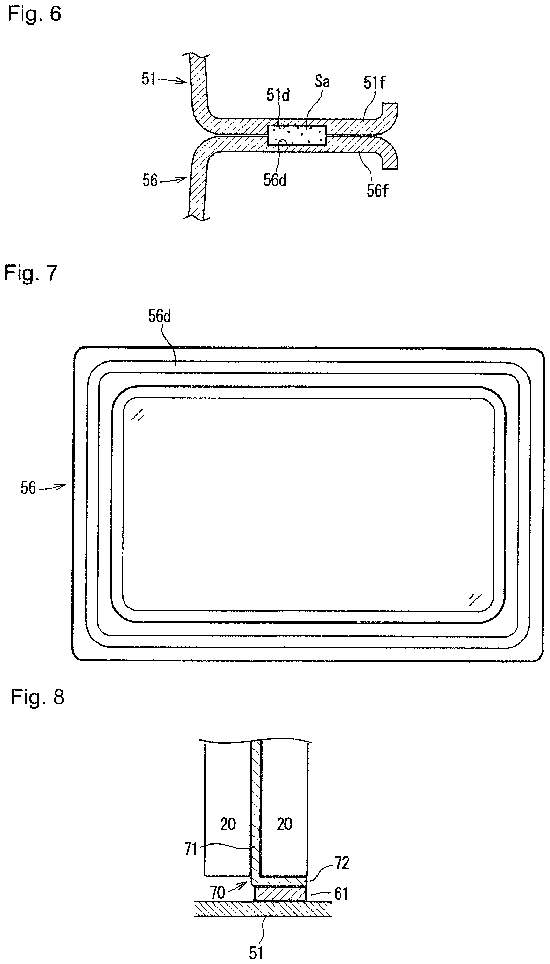

A closed housing 50 in this embodiment can yield the following effects. Specifically, even if a battery cell ignites due to a certain reason, it is possible to extinguish it automatically inside of the sealed housing 50. Thus, it is possible to prevent the ignition in the storage battery apparatus 1 and to prevent fire from spreading. To ensure sufficient sealing property, the flange portions 51f, 56f of the battery covers 51, 56 may have grooves 51 d, 56d with predetermined depth as shown in FIG. 6, and a seal member Sa may be disposed in a space formed therebetween. The grooves 51d, 56d (only a groove 56d is shown) are preferably formed along entire periphery of the flange portion as shown in Fig. 7. Outline shape of the groove (not shown) may be square. Although only one groove is formed in this example, two grooves inside and outside may be formed.

Dimensions of the grooves 51d, 56d may be variously modified. For example, provided that the thickness of the flange portions 51f, 56f is 1.6 mm, depth may be in the range of 0.8 mm to 1.0 mm (hence, height of inner space is about 1.6 mm to 2.0 mm), and width may be in the range of 6 mm to 12 mm. Both shape of the flange portions 51f, 56f may be identical. Alternatively, the depth and/or the width may be different from the other. A configuration may be used in which one flange portion has a groove, while the other does not. Pressing is preferable for forming grooves in terms of workability and reducing manufacturing cost, however the present invention is not limited thereto, other processing can be used.

The sealing member Sa is an elastic member for example. The sealing member Sa is compressed between the flange portions 51f, 56f to ensure airtightness. It might be difficult for pressing working to ensure flatness of the flange portions 51f, 56f, however, good airtightness can be achieved and self-extinguishing property is obtained by using the elastic sealing member Sa as shown in the present embodiment, even if the flange portions 51f, 56f do not have sufficient flatness.

The sealing member Sa may be formed in advance in a shape of the grooves 51d, 56d, but not limited thereto. For example, foamable material may be used. By way of example, after disposing the material with some flowabirity along the groove, then it foams to thereby fill the space between the grooves 51d, 56d. By way of example, sealing member, which is to be about 4 mm after foamed, may be compressed in a space of 2 mm height (in other words, a compression ratio of the foamed sealing member is about 50%).

Alternatively, sealing members such as a sealing ring or a gasket may be used. Depending on a type or shape of the sealing members, sealing member is not necessarily disposed in the groove. A sealing member can be interposed between flange portions 51f, 56f with no groove. It is noted that a housing 50 may have no sealing properties if the self-extinguishing property is not required.

### (Fixing of battery stack)

Referring to Figs. 1 and Figs.5, fixing of the battery stack 30 in the sealed housing 50 will be described. In the present embodiment, the battery stack 30 is configured to be secured to the closed housing 50 via supporting members 45, 46 as shown in Fig. 1.

Each of the supporting members 45, 46 is a metal plate bent in a stepped shape. By way of example, the supporting member 45 will be described. It has a fixing surface 45a extending along the side surface 56b-3 of the battery cover 56, a mounting surface 45b in which a plurality of screw holes are formed and bending from the lower end of the fixing surface 45a, a connecting surface 45c bending from the end portion of the mounting surface 45b, and a fixing surface 45d bending from the lower end of the connection surface 45c and extending along the cover bottom surface. Similarly, the other supporting member 46 has a stepped shape, but is different with respect to the number and position of the opening 45h and the like. The connecting portions 37 and 38 of the battery stack 30 described above are configured to be inserted into the openings 45h.

The supporting members 45, 46 may be welded to inner surface of the battery cover 56. Fig. 5 schematically shows a fixed state. The battery stack 30 is secured to the housing 50 by fixing a portion of the battery stack 30 to the supporting member 45 with screws B1 and by fixing the other portion to the other support member 46 with screws B2.

According to the present embodiment using the supporting member 45, 46, a fixing position (in other words, position of the mounting surfaces 45b, 46b shown in Fig. 5) of the battery stack 30 is closer to a centerline CL of the housing 50. This yields the following result.

The storage battery unit 10 is supposed not only in lateral direction as shown in Fig. 5 but also in a vertical direction (in other words, orientation in which the battery covers 51, 56 are aligned in the lateral rather than vertical). In that case, if a fixing positon of the battery stack is near a bottom surface of the cover member, a battery stack 30 would be supported in a cantilever-like state. This might affect a stability of the support. The present embodiment, however, can achieve stable support since the fixing position of the battery stack 30 locates closer to the centerline CL and a deviation of a center of gravity balance of the battery stack 30 is not noticeable.

Specific shape and the like have been described in accordance with particular configuration depicted in the drawings, however, configuration which can yield the similar result are not limited to the above structure. Supporting member may be any member that has a fixing portion to be attached to the battery cover and a mounting portion to which a part of the battery stack is connected. In the example of Fig. 5, mounting surfaces 45b, 46b are located near the middle between the bottom surface and the centerline CL of the battery cover 56, however, it can be changed freely. It may be located at a position closer to the centerline CL (including on the line CL), or, may be located a position away from the central line CL. Supporting member is not necessarily the same as the other member.

### (Heat dissipation structure)

Heat dissipation of the storage battery unit 10 will be described. In this embodiment, one side of the battery module 20 of the battery stack 30 is in thermally contact with an inner surface of the battery cover 51 and the other side is in thermally contact with the inner surface of the battery cover 56 as shown in Fig.1 and Fig. 5. Specifically, the battery module 20 and the battery covers 51, 56 are in thermally contact with each other via heat conductive sheets 61 and 62. It is noted that one of or both of the heat conductive sheets may be omitted.

Referring further to Fig. 4, the heat conductive sheet 61 is disposed on a longer side surface 24 of the battery module 20 in the present embodiment. One heat conductive sheet 61 may be disposed on the side surface 24 of the battery module 20. Alternatively, two, three or more sheets may be disposed.

The heat conductive sheet is not limited to particular material as long as it can transmit heat from the battery module 20 to other members outside effectively. By way of example, heat conductivity may be 1.0 (W · m⁻¹. · K⁻¹) or more, or 10 (W · m⁻¹ · K⁻¹) or more. With respect to a shape, elastic sheet material with a certain thickness (e.g. range of 0.5 mm to 3.0 mm) may be used. For example, its outer shape may be a rectangle, a parallelogram, a trapezoid, a circle, an ellipse, an oval and the like. One or both surfaces may be adhesive. The heat conductive sheet may be flame retardant. The heat conductive sheet may adhere to one or both of side surfaces of the battery module and inner side of the housing. The heat conductive sheet may be disposed in a compressed state.

Ratio of the heat conductive sheet(s) to a side surface of the battery assembly may be 50% or more, 60% or more, 70% or more, 80% or more, 90% or more, or 95% or more. Ratio of the heat conductive sheet(s) to a side surface of the battery module (flat portion not including rounded portion if corner is rounded) may be 50% or more, 60% or more, 70% or more, 80% or more, 90% or more, or 95% or more.

The heat conductive sheets 61 may be attached directly to the battery module 20, but in this example, attached to a heat conductive plate 70 in Fig.4. The heat conductive plate 70 is made of a metal plate. The heat conductive plate 70 has a contact surface 71 which is interposed between main surfaces 22 of the adjacent battery modules 20 (only one of the battery module 20 shown in Fig. 4) and one or more extending portions 72 bending from one edge of the contact surface 71. In this embodiment, two extending portions 72 are provided and bent with respect to the contact surface 71.

Through holes 71h are formed at four corners of the flat portion 71. The heat conductive plate 70 is configured to be supported between the battery modules 20 by securing fixing rods inserted into the through holes 71 h.

As schematically shown in Fig. 8, when assembled, the contact surface 71 of the heat conductive plate 70 is in contact with the main surfaces of the two battery modules 20, whereas the extending portions 72 are in contact with side surface of the battery module 20. Then, the heat conductive sheet 61 is interposed between outer surface of the extending portion 72 and the battery cover 51.

According to the above-mentioned configuration, heat generated in the battery module 20 is transmitted to the battery cover 51 via the heat conductive plate 70 and heat conductive sheet 61, and then it is radiated. Fig. 1 does not show the detail, however, heat conductive sheet is preferably disposed on the other side of the battery module 20 (lower side surface in Fig. 1). In Fig. 5, a heat conductive sheet 62 is schematically shown.

Heat conductive sheets 61 are disposed on side surfaces of the battery modules 20 respectively. However, heat conductive sheet 62 may be disposed on side surfaces of a plurality of the battery modules 20 (for example, one sheet for four battery modules or for eight battery modules). In this case, the heat conductive sheet may be directly contact with side surfaces of the battery module 20 without using the heat conductive plate 70 of Fig. 4. Alternatively, separated heat conductive sheets 62 similar to the thermal conductive sheet 61 may be used.

It is noted that a sheet common to a plurality of the battery modules 20 such as the heat conductive sheet 62 can be used as heat conductive sheet 61. Alternatively, a plurality of heat conductive sheets such as the heat conductive sheets 61 as shown in Fig. 1. may be used.

The storage battery unit 10 described above is provided with battery covers 51, 56 having the seamless cup portions respectively formed by press working (for example, deep drawing press working). Accordingly, the following advantages are obtained. That is, for a component of the sealed housing, a box-shaped cover formed by a folded and welded metal plate can be used, however, such works take much time. In contrast, the battery covers 51, 56 as described above are advantageous for easily assembling and reducing manufacturing cost since it can be formed by press working.

Furthermore, since the battery covers 51, 56 has no seam, unlike welding, equality of heat conductive property and heat dissipating property can be improved and thus preferable heat dissipation property is obtained. Rounded corner of the battery covers 51, 56 can be easily formed by press working. Furthermore, it is preferable for improving heat dissipating property, because air can flow smoothly inside or outside of the cover member (in other words, inside and outside of the housing). In particular, radius of curvature with 25 mm or more, preferably with more than 30 mm, for example, can effectively prevent occurrence of turbulent flow at the corners.

### (Installation of storage battery units)

Orientation of the storage battery unit 10 in use is not limited particularly, but it can be used in any orientation. The storage battery unit is supported on the frame 80 in vertical direction (an orientation in which the battery covers 51, 56 are arranged in lateral direction rather than the vertical direction) in the present embodiment as shown in Fig. 2.

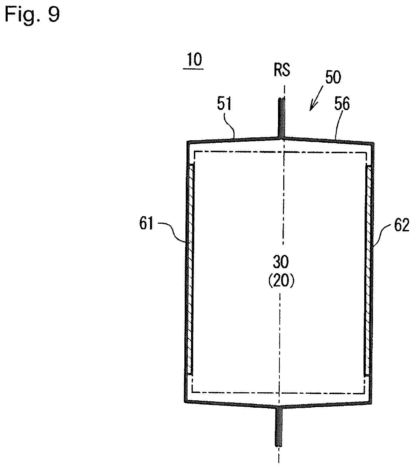

In this case, side surfaces of the battery module 20 are in thermally contact with battery covers 51, 56 as schematically shown in Fig. 9. In other words, thermal contact areas between the battery module 20 and the battery covers 51, 56 are located on the right and left sides of the storage battery unit 10 in use orientation. The configuration as above, depending on a positional relationship of equipment around the storage battery unit 10, enables air to smoothly flow compared with a configuration in which thermal contact position is located at the upper side and/or lower side, resulting in a good radiation effect.

The configuration in which either of the heat conductive sheets 61, 62 is disposed only on one side rather than both sides of the battery module 20 can also yield the similar effect to the above mentioned case. In addition, the battery module 20 may directly contact with the battery cover 51 or the battery cover 56 without using the heat conductive sheet 61, 62. When focusing on the heat dissipation effect by side arrangement of the thermal contact portion, it is noted that a person skilled in the art can understand that shape of the closed housing is not limited to particular shape as long as the thermal contact location is provided at such a location of the storage battery unit. Therefore, not only the battery cover formed by deep drawing as shown in Fig. 1, but a battery cover formed by welding or the like can also be used.

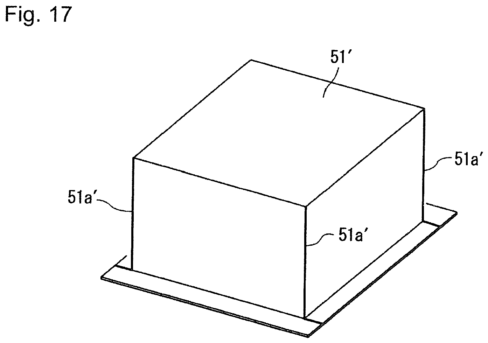

For battery covers formed by using welding and the like, a battery cover 51 shown for example in Fig. 17 may be used. The cover is made by folded metal sheet with line welds 51a' formed by welding.

### (Mounting of frame and module)

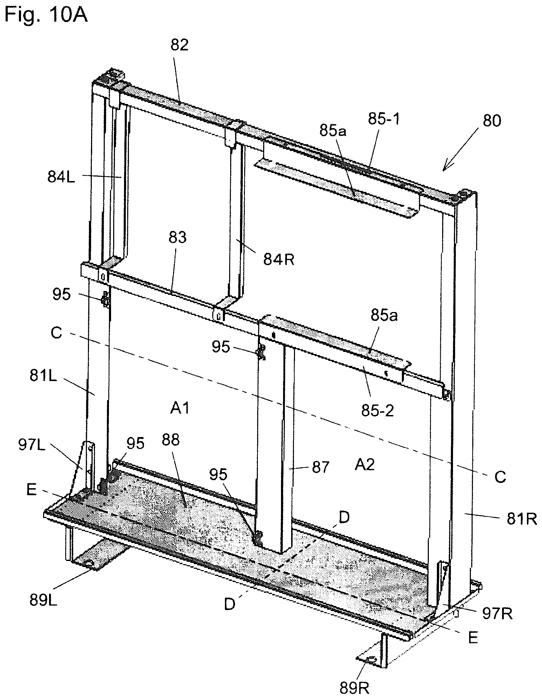

A frame 80 for supporting the storage battery units 10 and the junction box 91 and the like (see Figs. 2 and 10A) will be described. Fig. 2 and Fig. 10A show partly different frames 80, however, it is not essential difference and each configuration may be used. All members constituting the frame 80 may be made of metal.

As shown in Fig. 10A, the frame 80 has a base plate 88, supporting columns 81 L, 81R disposed vertically at both ends of the base plate 88, and lateral frame members 82, 83 spanning between the supporting columns 81L, 81R. The frame 80 provides an upper mounting space and a lower mounting space.

Leg portions 89L, 89R are provided on the left side and right side of the under surface of the base plate 88. Each leg portion 89L, 89R may be a folded metal plate. The leg portions 89L, 89R may have one or more through holes into which a fixing screw is inserted.

A partition member 87 is disposed vertically between two supporting columns 81L, 81R for providing spaces A1, A2 in which the storage battery units 10 (see Fig. 1 and Fig. 2) are disposed respectively. The spaces A1 are A2 arranged side by side in this configuration.

The storage battery unit 10 may be secured to the frame 80 by using mechanical fixtures such as fastening bolts or rivets, for example, but not limited thereto. The flange portion 51f of the storage battery unit 10 may be fixed to a part of the frame 80 (for example, to one of posts 81 L, 81 R, and a center partition member 87).

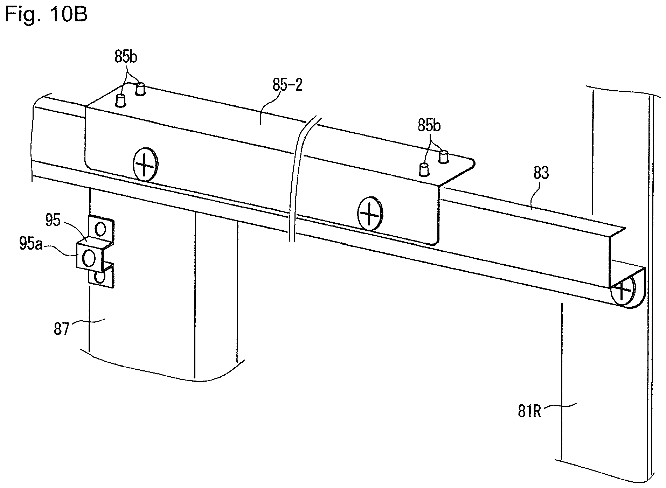

It is preferable that the fixture is configured to fix the unit 10 so that it can be detached. Specifically, the storage battery unit 10 can be secured via mounting members 95 as shown in Fig. 10A and 10B. The mounting member 95 has a mounting surface 95a apart from a side surface of the partition member 87 by a predetermined distance. In this case, even if an outer edge of the flange portion 51 f of the battery cover 51 is not straight but a curved portion 51 e as shown in Fig. 5, the flange portion of the storage battery unit 10 can be properly attached to frame 80. The number of mounting members 95 for fixing one storage battery unit 10 may be, but not limited to, four in this example.

In addition to fixtures such as fixing bolts and rivets, fixing device such as a snap fit fixture, which does not need a tool, and the unit 10 will be fixed when the unit 10 has been moved with respect to the frame 80 to a predetermined position may be used, for example.

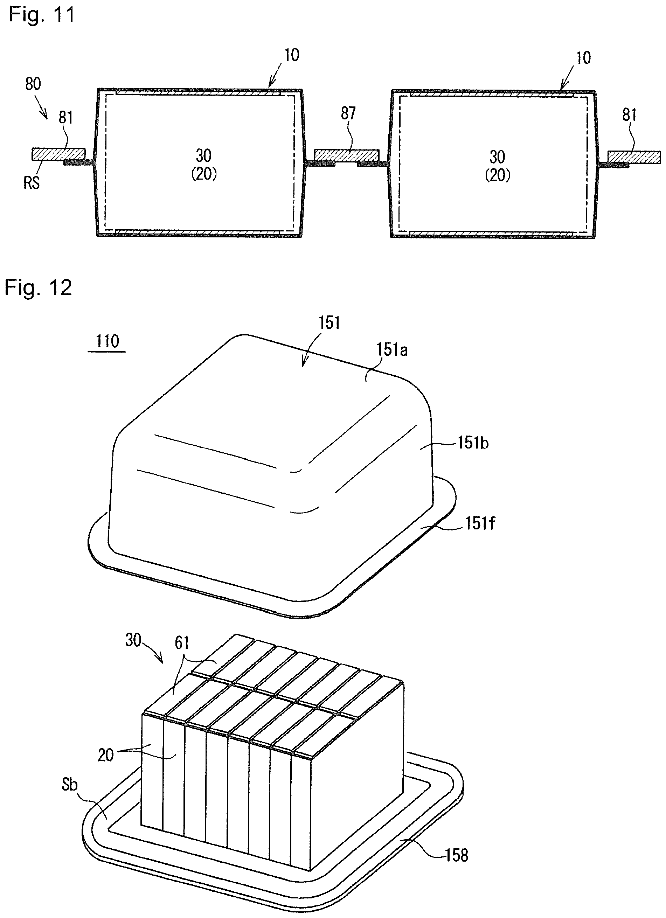

Fig. 11 is a transverse sectional view schematically showing a state in which the storage battery unit 10 is attached to the frame 80. According to the configuration of the present embodiment, a storage battery unit 10, as shown in Fig. 5, is configured as a sealed housing 50 made of a substantially symmetrical shape with respect to the centerline CL. Therefore, in a state where the flange portion 51f and the like of the storage battery unit 10 is mounted to the frame 80, a displacement (referring to a vertical direction in Fig. 11) of the center of gravity of storage battery unit 10 and the mounting reference surface RS is reduced as shown in Fig. 11, as a result the storage battery unit 10 can be supported in a good balance of center of gravity.

As schematically shown in Fig. 11, it is also preferable that both the flange portions of one storage battery unit 10 the other storage battery unit 10 are fixed to the center partition member 87. In this case, since the partition member 87 functions as a common holding member for two modules, advantageously it is possible to simplify the configuration and to reduce of manufacturing cost.

In the upper left space of the frame 80, two bracket members 84L and 84R span a upper and a lower lateral frame members 82, 83 along vertical direction. Each of bracket member 84L and 84R is formed in a substantially U-shape as a whole. The junction box 91 is to be mounted thereto.

In the upper right space of the frame 80, holding plates 85-1, 85-2 are fixed to each of lateral frame members 82, 83. Both holding plates 85-1, 85-2 have a horizontal surface 85a extending opposite directions respectively, particularly in one example, the horizontal surface 85a of the holding plate 85-1 extends towards the front side, while the horizontal surface 85a of the holding plate 85-2 of the bottom extends towards the back side. The PCS unit 92 is to be mounted between the upper and lower holding plate 85-1, 85-2.

As a result, as shown in Fig. 2, in the present embodiment, the storage battery units 10 are installed in lower position of the frame side by side, and junction box 91 and the PCS unit 92 are installed in upper position of the frame side by side.

The holding plate 85-2 may have protrusions 85b as shown in Fig. 10B.

If a storage battery unit 10 is positioned above the PCS unit 92 and the like, the storage battery unit is likely to suffer from heat when the heat amount of the PCS unit 92 is large. However, according to the configuration of Fig. 2, since the storage battery unit 10 is positioned lower place, advantageously such a problem is less likely to occur.

In addition, as illustrated in Fig. 3, a housing 110 including a housing body 111 configured to cover the whole frame 80 and covers 112, 113 provided on front side each of which is detachable can yield the following advantages. That is, for example, it is possible to access to the PCS unit 92 and the like by just opening the upper cover 112 if repair or modification for the upper PCS unit 92 required. Or, it is possible to directly access to the storage battery unit 10 by just opening the lower cover 113 and the like directly if repair or modification for lower storage battery unit 10 required.

In a configuration storage in which storage battery units 10 are disposed along front-rear direction, if user wishes to access to the rear side module 10, then the front side module 10 may obstruct an access from front side as above or causes the module to be detached. However, according to the lateral arrangement as shown in Fig.2, use can access directly to the respective module 10, which is convenient.

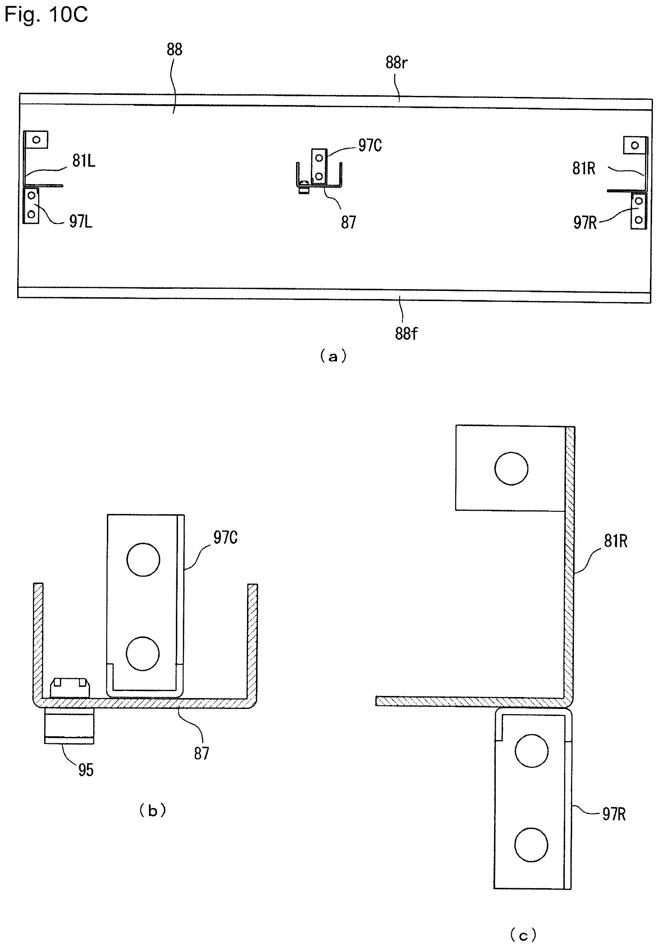

The frame 80 is not limited to a specific configuration or shape. In the example of this embodiment, a structure as shown in Fig. 10C to Fig. 10E is used. Supporting columns 81L, 81R and partition member 87 may be mounted on the base plate 88 independently, or other configurations may be used. As shown in Fig. 10C (see also Fig. 10A), the supporting columns 81L, 81R and the partition member 87 can be mounted via fixing members 97L, 97R, 97C, respectively.

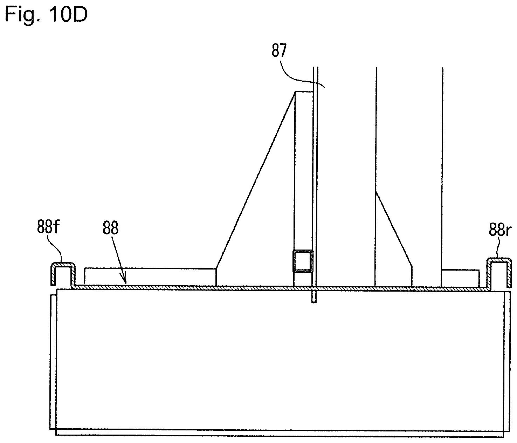

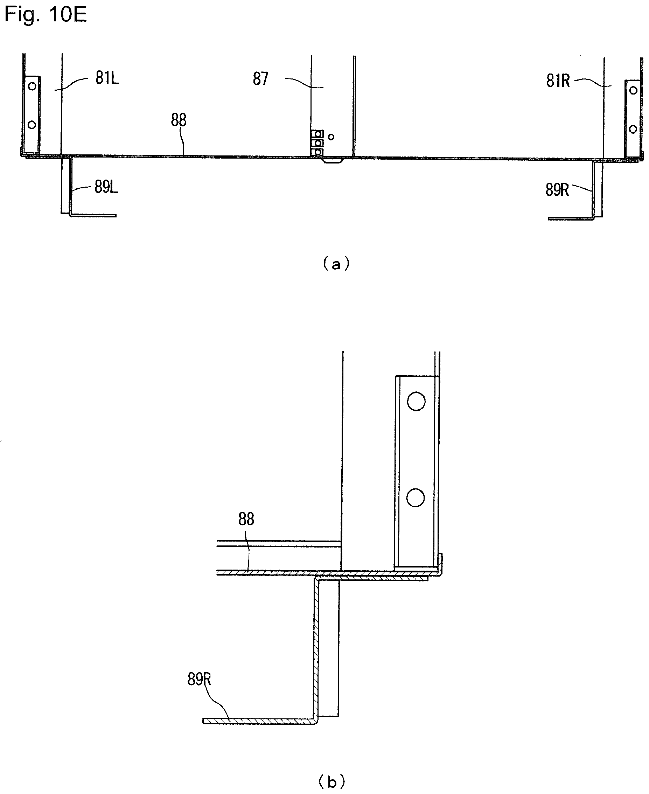

Base plate 88 having protruding portion 88f and 88r at a front end and a rear end of the apparatus as shown in Fig. 10C and Fig. 10D may be used. Connecting portions between the base plate 88 and the leg portions 89L, 89R or the like may be a structure as shown in Fig. 10E.

### (Other embodiments of the storage battery units)

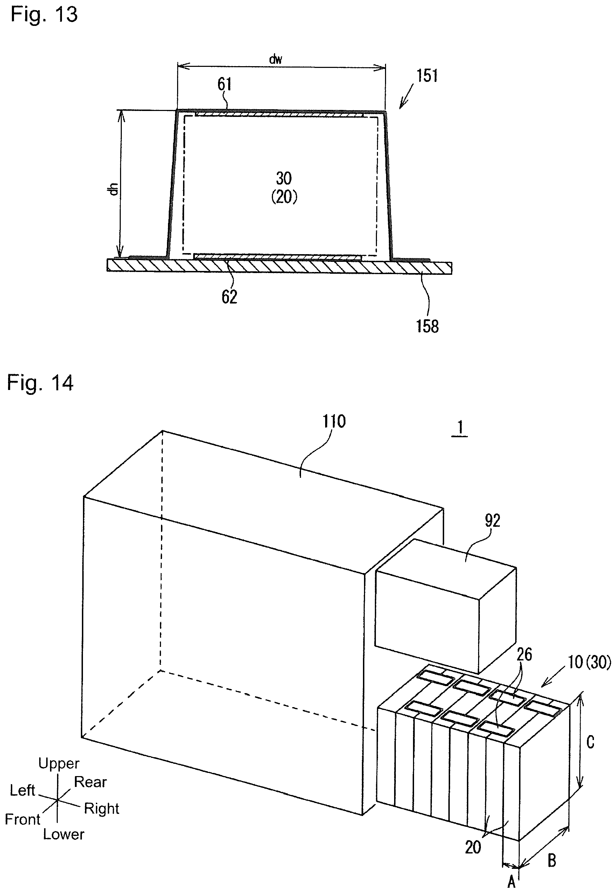

Although embodiments of the present invention have been described, a storage battery unit of the present invention may be a configuration as shown in Fig. 12 and Fig. 13.

The storage battery unit 110 includes a base plate 158 on which a battery stack 30 is disposed and a battery cover 151 having a shape to cover the entire of battery stack 158. Battery stack 30 is depicted schematically but it may be substantially the same as that of Fig. 1.

However, if the battery stack 30 as shown in Fig. 1 is used, extending portions 31 a, 32a (portion where the fixing screw is attached) of the end plates 31 and 32 may be moved to lower position, so that these portions can be fixed to the base plate 158.

Battery cover 151 is formed of a metal plate by press working, similarly to the embodiment as mentioned above. It has a cover surface 151 a, four side surfaces extending downwardly from a periphery of the cover surface 151 a, and a flange portion 151f formed at ends of the side surfaces. The battery cover 151may have an aspect ratio (dw: dh), for example, in a range of about 1: 0.3 to 1:4, by way of example, 2:3.

Fixing screws, rivets, welding or the like can be used for fixing the flange portion 151 f of the battery cover 151 to the base plate 158, for example. As schematically shown in Fig. 13, a sealing member 158 may be disposed between the flange portion 151f and the base plate 158. Various seal may be used for the searing member 158. In one example, it may be a gasket surrounding the battery stack 30, corresponding to the shape of the flange portion 151f.

Base plate 158 may be a metal plate, for example. Materials of the base plate 158 and the battery cover may be the same or different. Outer shape of the base plate 158 may be the same square shape as that of the flange portion 151 f. Or, it may be slightly larger than the flange portion 151f.

In this configuration, it is preferred that a part of the battery stack 30 is in thermally contact with a portion of the metal cover 151 so as to provide heat dissipation mechanism as shown in Fig 14. In this example, one surface (upper surface) of the battery stack 30 is in thermally contact with the inside of the upper surface of the battery cover 151 via the heat conductive sheet 61. The other surface (lower surface) of the battery stack 30 is thermally contact with the base plate 158 via the heat conductive sheet 62. Although the heat conductive sheets 61, 62 may be of any shape, but in this example, heat conductive sheets 61 are disposed on a surface (upper surface) of the battery module 20 respectively as shown in Fig. 13. Although detailed illustration is omitted, in this case, a heat conductive plate 70 as shown in Fig. 4 may be disposed between the battery modules 20. With respect to the heat conductive sheet 62, it may have the same structure as that of the heat conductive sheet 61 of the upper surface. Alternatively, common one larger heat conductive sheet for a plurality of battery modules 20 or two or more heat conductive sheets can be used.

### (Storage battery apparatus with excellent installation property and maintainability or the like.)

Fig. 14 is a perspective view schematically showing a storage battery apparatus according to one embodiment of the present invention. Here, the frame 80 (see Fig. 2), the housing 50 of the storage battery unit 10 (see Fig. 1), and the junction box 91 are not shown. Housing 110 is a box disposed such that one of the largest surfaces is positioned at the front side and the depth dimension of the box is relatively short (in other words, the depth dimension is less than both height dimension and width dimensions of the housing).

It is noted that the junction box 91 is not an essential component in one embodiment of the present invention. With respect to the PCS unit 92, it is not limited to such a component name, but another charge and discharge unit for controlling charging and discharging of the battery module 20 (for example, an electric circuit. Specifically, an electric circuit including at least a circuit for controlling charging and discharging or the like) may be used. The housing 50 (Fig. 1) for accommodating the battery stack 30 is not shown in Fig. 14. It is preferably present, but it may be omitted in some cases.

The Battery stack 30 is schematically illustrated as an assembly of eight stacked battery modules. Similar to the above embodiments, one battery module 20 has a shape of the height (C)> the width (B)> the he thickness (A). Further, in this embodiment, adjacent battery modules 20 are electrically connected to each other via a busbar 26, and a plurality of battery modules 20 are connected in series. Busbars 26, as an example, may be arranged alternately in a staggered pattern on the upper surface of the battery stack 30.

Similar to the above embodiments, each battery module is arranged so that the width direction of the battery module 20 becomes substantially parallel to the depth direction (front-rear direction) of the storage battery apparatus 1, in other words, the width direction of the battery module 20 is along the depth direction (front-rear direction) of the storage battery apparatus 1. According to this structure, the following advantages are obtained.

For an arrangement of the battery modules 20, a layout may be considered wherein two assemblies each of which include four battery modules 20 are disposed in front-rear direction, gathering eight battery modules in total. However, in such an arrangement, at least one of the following problems would occur:
- Different length busbars are needed for electrical connection between the battery modules,
- the center of gravity of the entire device become high, since a position of battery module, heavy instrument, become high, and
- Access for the battery module disposed at the rear side become difficult.

On the other hand, according to the arrangement of Fig. 14, at least one of the following effects can be obtained:
- depth of a storage battery apparatus 1 is not influenced by the number of battery modules 20,
- battery modules 20 can be connected with only one type of busbar 26, and
- accessibility to each battery module 20 are improved.

Furthermore, according to the arrangement, as shown in FIG. 14, of the storage battery unit 10 (hereinafter, also referred to the battery unit (10)) and the PCS unit 92 (hereinafter, also referred to charge and discharge device (92)), at least one of the following advantages are obtained:
- it is possible to reduce the depth dimension of the storage battery device 1,
- accessibility to the charge and discharge device (92) and the battery module 20 is improved,
- advantageous in cost reduction if the charger and discharger device (92) is positioned just above the battery unit (10), because a connection scale length for connecting them can be shorten,
- center of gravity of the storage battery apparatus 1 is lowered to thereby improve the installation stability.

If the center of gravity of the device is high, it is necessary for example to use a overturning prevention tool such as a stabilizer (not shown) or to increasing the strength and rigidity of the housing itself to prevent the apparatus from overturning during earth quake and the like. On the other hand, according to the configuration shown in Fig. 14, it is possible to lower the center of gravity of the apparatus, to eliminate such needs, thereby reducing the manufacturing cost of the housing or frame.

It is noted that every effects as mentioned above are not necessarily achieved at the same time, of course, but preferred configuration can be used according to a specifications and purposes of the storage battery apparatus.

### (Arrangement of storage battery units and PCS unit)

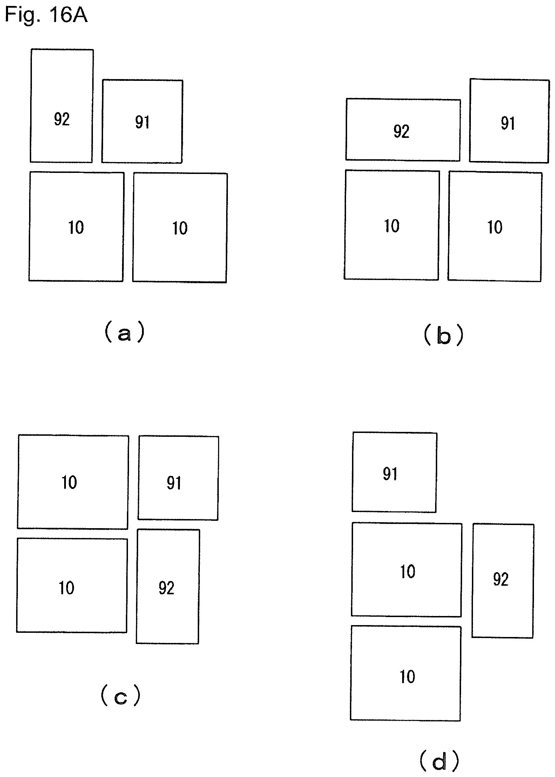

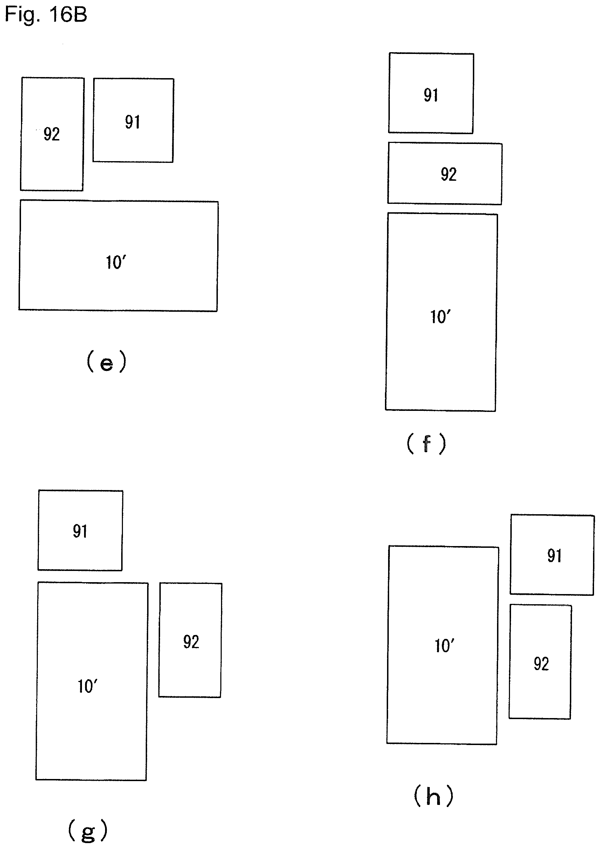

In the storage battery apparatus according to one aspect of the present invention, storage battery unit and PCS unit may be arranged in various positions as shown is Fig. 16A and Fig. 16B.

In Fig. 16A (a) and (b), two storage battery units are disposed in lower space side by side, and the junction box 91 and the PCS units 92 are disposed in upper space side by side.

In Fig. 16A(c), two storage battery units 10 are disposed vertically, and the junction box 91 and the PCS unit 92 are disposed at the side thereof. In Fig. 16A(d), the junction box 91 is disposed above the battery unit 10, and the PCS unit 92 is disposed at the side of the other unit 10.

In Fig. 16B (e) to (h), a large unit 10' corresponding to two storage battery units 10 is used. In Fig. 16B(e), the junction box 91 and the PCS unit 92 are disposed side by side above the battery unit 10'. In Fig. 16B (f), the PCS unit 92 and the junction box 91 are disposed vertically above the storage battery unit 10'. In Fig.16B (g), the junction box 91 is disposed above the storage battery unit 10' and the PCS unit 92 is disposed at the side of storage battery unit 10'. In Fig. 16B(h), the junction box 91 and the PCS units 92 are disposed at the side of the storage battery unit 10' vertically.

Embodiments of the present invention have been described referring to the drawings. The present invention is not limited to those described above but various modifications are available:
(a) With respect to the battery covers 51, 56 and the like, covers having cup portion of substantially rectangular bottom shape have been described, but shape of the bottom surface may be circular, oval, polygonal or combinations of two or more thereof.
(b) In the above, battery covers whose bottom surface of recess portion may be flat or convexo-concave formed thereon, however, a bottom surface may have two or more surfaces with different heights respectively.
(C) With respect to the battery stack 30, a battery stack in which eight battery modules are partitioned by four by means of one partition plate 32. However, for example, twelve battery modules 20 can be partitioned by four by means of two partition plates.

### (SUPPLIMENTALY NOTE)

The present application discloses the following inventions:
1. A storage battery apparatus (1), comprising:
   a battery section (10) including a battery stack (30) in which a plurality of battery modules (20) are stacked; and
   a charge and discharge device (92) configured to manage charging and discharging of the battery module;
   wherein the battery module (20) has a dimensional relationship of C> B> A, wherein A is a thickness, B is a width, and C is a height of the battery module (note: a protrusion is not included in the dimensions if a terminal for electrical connection protrudes as shown in Fig. 4.), and wherein the battery modules (20) are disposed so that the width direction of the battery module extends along front-rear direction of the storage battery apparatus,
   and wherein the battery section (10) is disposed below the charge and discharge device (92).
   With this arrangement, since the battery unit is disposed below the charge and discharge device, low center of gravity of the entire apparatus is achieved. Further, the battery module is arranged so that the width direction is substantially parallel to the depth direction of the storage battery apparatus, therefore f accessibility to each battery module is improved, even if the apparatus has no rails to pull out the battery modules.
2. The storage battery apparatus as mentioned above, wherein the battery section is configured as a storage battery unit (10) in which the battery stack (30) is accommodated in a housing (50). Even with this configuration, it is possible to obtain the same advantageous effects according to the present invention.
3. The storage battery apparatus as mentioned above, wherein the number of the battery section is two and the battery sections are arranged side by side in a lateral direction. For a configuration with two battery sections, it is possible to lower the center of gravity of the entire device by placing both battery sections below the charge and discharge device.
4. The storage battery apparatus as mentioned above, further comprises three or more battery modules (20) connected in series, wherein adjacent battery modules are electrically connected to each other by same shape busbars. In this case, it is possible to utilize a common busbar, which is advantageous in reducing manufacturing cost.
5. The storage battery apparatus as mentioned above, wherein the number of battery modules in one battery section is 8 to 16. Even with this configuration having a plurality of the battery modules, it is possible to obtain the same advantageous effects according to the present invention.

### REFERENCE NUMERAL LIST

- 1: STORAGE BATTERY APPARATUS
- 10, 110: STORAGE BATTERY UNIT
- 20: BATTERY MODULE
- 21: HOUSING CASE
- 22: MAIN SURFACE
- 23, 24: SIDE SURFACE
- 25a, 25b: TERMINAL
- 26: BUSBAR
- 27: PLASTIC CASE
- 28: COVER
- 29: RECESS
- 29a: PRESS SURFACE
- 30: BATTERY STACK
- 31: END PLATE
- 32: PARTITION PLATE
- 37, 38:
- 45, 46: SUPPORTING MEMBER
- 50: SEALED HOUSING
- 51, 56: BATTERY COVER
- 51a: COVER SURFACE
- 51b: SIDE SURFACE
- 51f: FLANGE PORTION
- 61, 62: HEAT CONDUCTIVE SHEET
- 70: HEAT CONDUCTIVE PLATE
- 71: CONTACT SURFACE
- 72: EXTENDING PORTION
- 80: FRAME
- 81L, 81R: SUPPURTING COLUMN
- 82, 83: LATERALL FRAME MEMBER
- 87: PARTITION MEMBER
- 88: BASE PLATE
- 89L, 89R: LEG PORTION
- 91: JUNCTION BOX
- 92: PCS UNIT
- 110: HOUSING
- 111: HOUSING BODY
- 112: UPPER COVER
- 113: LOWER COVER
- 158: BASE PLATE
- SA: SEAL MEMBER

## Claims

1. A storage battery apparatus, comprising:
a battery section including a battery stack in which a plurality of battery modules are stacked; and
a charge and discharge device configured to manage charging and discharging of the battery module;
wherein the battery module has a dimensional relationship of C> B> A, wherein A is a thickness, B is a width, and C is a height of the battery module, and wherein the battery modules are disposed so that the width direction of the battery module extends along front-rear direction of the storage battery apparatus,
and wherein the battery section is disposed below the charge and discharge device.

2. The storage battery apparatus according to claim 1, wherein the battery section is configured as a storage battery unit in which the battery stack is accommodated in a housing.

3. The storage battery apparatus according to claims 1 or 2, wherein the number of the battery section is two and the battery sections are arranged side by side in a lateral direction.

4. The storage battery apparatus according to any one of claims 1 to 3, further comprises three or more battery cells connected in series, wherein adjacent battery modules are electrically connected to each other by same shape busbars.

5. The storage battery apparatus according to any one of claims 1 to 4, wherein the number of battery modules in one battery section is 8 to 16.
